# EUROPÄISCHE PATENTSCHRIFT

(11) **EP 2 823 146 B1**
(45) Veröffentlichungstag und Bekanntmachung des Hinweises auf die Patenterteilung: **15.08.2018**
(21) Anmeldenummer: 13712161.2
(22) Anmeldetag: 05.03.2013
(51) Int. Cl.: E21B 47/10, G01M 3/28

(54) **VERFAHREN ZUR PRÜFUNG DER DICHTHEIT VON KAVERNENZUGANGSBOHRUNGEN UND VORRICHTUNG ZUR VERRINGERUNG DER KONVEKTIONS- UND DIFFUSIONSSTRÖMUNG**
METHOD FOR TESTING THE TIGHTNESS OF THE ACCESS WELL OF AN UNDERGROUND CAVITY AND DEVICE FOR DECREASING CONVECTION AND DIFFUSION FLOW
PROCÉDÉ DE CONTRÔLE DE L'ÉTANCHÉITÉ DU PUITS D'ACCES D'UNE CAVITÉ SOUTERRAINE ET DISPOSITIF DE RÉDUCTION DE L'ÉCOULEMENT PAR CONVECTION ET PAR DIFFUSION

(30) Priorität: 06.03.2012 WO PCT/DE2012/000217; 06.03.2012 US 201261607082 P
(43) Veröffentlichungstag der Anmeldung: 14.01.2015
(73) Patentinhaber: Untergrundspeicher- und Geotechnologie-Systeme GmbH, 15749 Mittenwalde/Mark (DE)
(72) Erfinder: ABDEL HAG, Amer, 15834 Rangsdorf (DE)
(74) Vertreter: Maikowski & Ninnemann Patentanwälte Partnerschaft mbB
(86) Internationale Anmeldenummer: PCT/EP2013/054401
(87) Internationale Veröffentlichungsnummer: WO 2013/131914

(56) Entgegenhaltungen:
- F. Crotogino: "SMRI Reference for External Well Mechanical Integrity Testing / Performance, Data Evaluation and Assessment" In: "Solution Mining Research Institute (SMRI) Research Project Report 95-0001-S", 1995, Solution Mining Research Institute, XP055045661, Seite 1-32, 62-60, Abbildung 4-7; Seiten 18, 25

## Beschreibung

Die Erfindung betrifft insbesondere ein Verfahren zur Prüfung der Dichtheit einer Zugangsbohrung einer Höhlung durch Beaufschlagen der Höhlung mit einem Testgas.
Aus Crotogino, F: "SMRI Reference for External Well Mechanical Integrity Testing / Performance, Data Evaluation and Assessment", in: Solution Mining Research Institute (SMRI), Ressearch Project Report 95-0001-S, Solution Mining Research Institute, XP055045661 ist in diesem Zusammenhang ein Verfahren zum Testen der mechanischen Integrität von Kavernenbohrungen bekannt. Hierbei wird ausdrücklich darauf hingewiesen, dass das beschriebene Verfahren nicht zum Testen gasbefüllter Kavernen geeignet ist.
Zur Speicherung von Erdgas oder anderen technischen Gasen in größerem Maßstab, wie beispielsweise Wasserstoff oder Kohlendioxid zur Entsorgung, ist es bekannt, das Gas in untertage liegenden Höhlungen, beispielsweise in ausgesolten Kavernen, in Aquiferen oder in anderen künstlich geschaffenen Untertageformationen unter Druck zu speichern. Diese künstlich gebildeten geologischen Formationen sind nach eingehender Prüfung druckdicht und verändern ihre druckdichten Eigenschaften nur in geologischen Zeiträumen. Um in diesen Höhlungen Gase speichern zu können, ist es notwendig, einen Zugang zu den Höhlungen mittels einer Zugangsbohrung zu schaffen. Diese Zugangsbohrung besteht
aus dem Bohrloch selbst und einer Verrohrung, die am Kopf der Höhlung einen Rohrschuh bildet. Der Rohrschuh bildet den Übergang von der Höhlung zu dem künstlich geschaffenen Zugang. Solche Zugangsbohrungen dauerhaft abzudichten, ist eine wohlbekannte Technologie.

Im Folgenden werden unter dem Begriff "Höhlung" vom Menschen geschaffene oder natürlich entstandene Kavernen, aber auch Aquiferen verstanden. Auch wenn Aquiferen oder poröse Gesteinsschichten keine Höhlungen im allgemeinen Sprachgebrauch sind, so bilden diese unterirdische und gasdichte Volumina. Solche unterirdischen gasdichten Volumen sind nach der Lehre dieser Patentanmeldung Höhlungen.
Bei der Herstellung der Zugangsbohrung zur Höhlung ist die Höhlung im Allgemeinen mit Wasser oder mit Sole gefüllt. Um die Dichtheit des geschaffenen Zugangs zu prüfen, wird das Volumen des Zugangs, also die verrohrte Zugangsbohrung mit einem Testgas beaufschlagt und nach einer vorbestimmten Zeit, beispielsweise 72 Stunden, der Druck im Zugang gemessen. Hat sich der Druck nur unwesentlich geändert, kann von einer Dichtheit ausgegangen werden. Ein Grund für das Nachlassen des Drucks, der nicht einer fehlenden Dichtheit zuzuschreiben ist, ist beispielsweise das Lösen des Testgases im vorhandenen Wasser oder der noch in der Höhlung befindlichen Sole. Nachdem der Zugang fertig gestellt und dessen Dichtheit dokumentiert ist, wird die Höhlung unter gleichzeitiger Befüllung mit Speichergas von der Sole entleert. Da die Speicherhöhlungen ein sehr großes Volumen aufweisen, dauert die Entsorgung des darin befindlichen Wassers bei geschlossenen Höhlungen oder die Verdrängung des Wassers in Aquiferen, also porösen
Gesteinsschichten, mitunter mehrere Monate. Hat die Höhlung erst einmal einen Betriebszustand erreicht, so verbleibt die Höhlung in diesem Zustand bis zu ihrer Stilllegung, gleich aus welchem Grund. Da sich die Eigenschaften der Höhlungen selbst nur in geologischen Zeiträumen ändern, ist die Betriebseignung in menschlichen Zeiträumen nur noch abhängig von den Eigenschaften der Zugangsbohrung. Um die Eignung der auf Langzeitbetrieb ausgelegten Zugangsbohrung nachträglich im Rahmen einer Routineuntersuchung zu dokumentieren, wäre es somit notwendig, die Dichtheit der Zugangsbohrung selbst zu dokumentieren. Des Weiteren ist es notwendig, bei einer geplanten Druckerhöhung der Speicherhöhlung die Zugangsbohrung auf ihre Dichtheit in Bezug auf den höheren Betriebsdruck der Höhlung zu dokumentieren. Eine über die Zeit durchgeführte Druckmessung einer gefüllten Kaverne in annehmbaren Zeiträumen ist aber aufgrund des sehr großen Volumens der Gasspeicher nicht möglich. Künstlich geschaffene Kavernen in geologischen Salzformationen liegen in einer Tiefe von 300 m bis 2.500 m mit einer eigenen Höhe von bis zu 800 m und einem Durchmesser bis zu 250 m. Aquiferenspeicher können ein noch größeres Volumen aufweisen. Derart große Höhlungen bilden faktisch einen Barostaten. Entweicht Speichergas aus diesen Höhlungen in einem bereits nicht mehr annehmbaren Maße, ändert sich der Druck in diesen sehr großen Höhlungen nahezu unmerklich. Zur Überprüfung der Dichtheit wäre es prinzipiell möglich, über einen längeren Zeitraum einen sehr geringen Druckabfall zu detektieren. Ein auf diese Weise detektierter Druckabfall könnte aber ebenso durch geringfügige Temperaturänderung innerhalb der Höhlung über den längeren Beobachtungszeitraum erzeugt werden, so dass die Druckmessung ein nur bedingtes Instrument zur Dichtheitsprüfung ist.
Eine Leerung der Höhlung und Befüllung mit Wasser oder Sole, um die Dichtheit der Zugangsbohrung wie bei der Erstellung der Zugangsbohrung zu dokumentieren, ist aus wirtschaftlichen Gründen kaum möglich. Denn dazu müsste das Speichergas und das im Totvolumen befindliche Kissengas aus der Höhlung entnommen und die Höhlung müsste mit Wasser oder Sole gefüllt werden. Ein solcher Prozess kann mehrere Monate dauern, innerhalb derer kein Gas gespeichert werden kann. Die Entsorgung des Wassers nach Durchführung der Messung würde erneut ein mehrere Monate lang dauernder Prozess sein.

Aufgabe der Erfindung ist es deshalb, ein Verfahren zur Prüfung der Dichtheit von Höhlungen zur Verfügung zu stellen, das im Betriebszustand der Höhlung, also im mit Speichergas gefüllten Zustand, durchgeführt werden kann.
Die erfindungsgemäße Aufgabe wird gelöst durch das Verfahren gemäß Anspruch 1 sowie mithilfe einer Vorrichtung zur Verringerung einer Konvektions- und Diffusionsströmung gemäß den Ansprüchen 7 und 8. Vorteilhafte Ausgestaltungen der Erfindung werden in den Unteransprüchen angegeben.
Erfindungsgemäß wird insbesondere ein Verfahren mit folgenden Schritten vorgeschlagen:
- Überschichten des in der Höhlung befindlichen Speichergases mit einem Testgas mit vordefinierter Menge, so dass sich eine Grenzschicht zwischen dem Speichergas und dem Testgas bildet,
- Ablassen des Testgases nach vordefinierter Zeit und
- Bilanzieren der Menge des Testgases.
Im Gegensatz zum Messen des Drucks über die Zeit eines zum Volumen des Speichers kleinen Volumens in der Größenordnung der Zugangsbohrung bis zum Rohrschuh, nämlich im zweistelligen Kubikmeter-Bereich, wird erfindungsgemäß vorgeschlagen, zur Dokumentation der Dichtheit nicht ausschließlich den Druck in der Höhlung über einen Beobachtungszeitraum zu messen, sondern am Ende eines Beobachtungszeitraumes das dem Speichergas überschichtete Testgas wieder abzulassen und eine Mengenbilanz aufzustellen. Fehlt Testgas, so ist von einer fehlenden Dichtheit auszugehen. Wird das Testgas vollständig zurück erhalten, so ist von einer Dichtheit der Zugangsbohrung auszugehen.
Die Erfindung macht sich die Erkenntnis zunutze, dass die Höhlung selbst ihre Dichtheitseigenschaften nur in geologischen Zeiträumen ändert. Von einer Dichtheit der Höhlung wird somit ausgegangen. Die einzige Stelle, die für einen Druckverlust in Frage kommt, ist somit der Bereich der Zugangsbohrung. Sollte die Zugangsbohrung für Gasverlust ursächlich sein, so kann die fehlende Dichtheit zu einem Gasverlust in andere geologische Schichten erfolgen, in benachbarte Höhlungen oder in Gesteinsverwerfungen. Von einem Gasverlust in die freie Atmosphäre ist bei Feststellung des Nachlassens der Dichtheit einer Zugangsbohrung nicht unbedingt auszugehen.

Zur Durchführung der Messung wird das Testgas, das ein anderes Gas als das Speichergas sein sollte und vorteilhafter eine geringere Dichte aufweisen sollte, damit es auf der Speichergasschicht aufschwimmt, so langsam in die Zugangsbohrung gepresst, dass sich eine stabile Grenzschicht zwischen Speichergas und Testgas bildet. Da das Volumen der Zugangsbohrung aus der ersten Bemessung bei Erstellung der Zugangsbohrung bekannt ist, wird exakt so viel Testgas in die Zugangsbohrung gedrückt, dass die Grenzschicht bei Beendigung der Beaufschlagung der Höhlung mit Speichergas zwischen Speichergas und Testgas am Bohrungsfuß oder am Kopf der Höhlung ausgebildet wird. Die so hergestellte Gasüberschichtung wird über einen vorbestimmten Zeitraum in der Größenordnung von 10 Stunden bis 100 Stunden in Ruhe gelassen und nach Ablauf der Ruhezeit wird das Testgas aus der Zugangsbohrung abgelassen. Beim Ablassen des Testgases wird eine Mengenbilanz aufgestellt. Dazu wird die Menge der Gasentnahme sehr genau protokolliert und beispielsweise in einem Bypass zur Entnahmestelle wird die Zusammensetzung des entnommenen Gases sehr genau bestimmt. Die Gasanalyse kann durch in den Gasentnahme-Kanal ragende Sensoren aber auch durch Sensoren in einem Bypass zur Entnahmeverrohrung geschehen.

Wichtig bei der Entnahme des Testgases ist die Bestimmung der Grenzschicht, also der Zeitpunkt während der Entnahme des Testgases, in dem bei idealer Grenzschichtausbildung das Testgas vollständig aus der Zugangsbohrung entnommen worden ist. Die Analyse des Testgases beim Ablassen und die Bestimmung der Ankunft der beim Ablassen des Testgases wandernden Grenzschicht an der Entnahmestelle ist also ein wichtiger Bestandteil des gesamten Verfahrens. Typischerweise ist dieser Zeitpunkt dann erreicht, wenn die quantitative Analyse des entnommenen Gases eine plötzliche Flanke aufweist, die Menge oder die Konzentration des Testgases anfängt, sich zu verringern. Je stabiler die Grenzschicht zwischen Speichergas und Testgas ausgebildet ist, desto schärfer ist der Übergang vom Testgas zum Speichergas in der Analytik feststellbar. Die bis zu diesem Zeitpunkt aus Druck, Temperatur, Durchfluss und Konzentration des entnommenen Testgases bestimmte Gasmenge erlaubt einen Rückschluss auf die Dichtheit der Zugangsbohrung. Wird weniger Testgas zurück erhalten, als ursprünglich auf das Speichergas überschichtet wurde, dann ist dies ein Zeichen für Gasverlust und damit ein Zeichen für das Fehlen der Dichtheit. Wird hingegen das Testgas vollständig oder mit einem akzeptablen Verlust aufgrund von Vermischung mit dem Speichergas zurückerhalten, so ist die Zugangsbohrung dicht.
In der Ruhezeit des Testgases ist es wichtig, dass die Grenzschicht zwischen Testgas und Speichergas möglichst stabil bleibt. Die Grenzschicht wird gestört durch Diffusionsströmung und durch Konvektionsströmung. Gerade die Konvektionsströmung kann durch geringe Temperaturunterschiede Konvektionswalzen aufbauen, durch die das Testgas im sehr großen Volumen des Speichergases aufgenommen wird und dadurch als Artefakt die Messung der Dichtheit stört. Bei der am Schluss des Verfahrens aufgestellten Massenbilanz würde das in das Speichergas entwichene Testgas fehlen und eine fehlende Dichtheit vortäuschen, die gar nicht vorhanden ist. Ursache für einen Temperaturunterschied zwischen Testgas und Speichergas ist beispielsweise der Temperaturgradient innerhalb der Erdkruste. Daher ist der Einsatz einer Vorrichtung zur Verringerung der Konvektions- und Diffusionsströmung zwischen Speichergas und Testgas vorteilhaft. Eine solche Vorrichtung kann eine Konvektionssperre sein. Je nach Beschaffenheit der Sperre kann die Konvektion mehr oder weniger stark unterbunden werden.

Dabei handelt es sich um ein mechanisches Element zur Dämmung der aufgrund Konvektion und Diffusion verursachten Vermischung beider Gase. Die Vorrichtung stört akut die vorhandene Geometrie der Bohrung in der Vermischungszone, übt aber gleichzeitig keinen Einfluss auf die strömungstechnischen Eigenschaften der Bohrung aus. Mit diesen technischen Eigenschaften kann das Testgas ungehindert in die Bohrung eingepumpt werden und gleichzeitig vom Speichergas chemisch überschichtet werden, so dass eine Massenbilanz des Testgases über die Testdauer ermittelt werden kann.

Eine erste Möglichkeit für eine Konvektionssperre ist eine Vorrichtung zur Verringerung Konvektions- und Diffusionsströmung gemäß dem Anspruch 7 mit einem aufblasbaren Balg, der in den Durchmesser des Bohrungsfußes passt und die Speichergasschicht von der darüber liegenden Testgasschicht absperrt. Damit kein Druckverlust über den Balg entsteht, ist eine Membran oder ein Schwamm im Balg vorgesehen, der die beiden Gasschichten miteinander verbindet. Dieser Schwamm kann einen nur sehr geringen Durchmesser von wenigen cm aufweisen oder auch großflächig im Bereich mehrerer Quadratmeter haben. Wichtig für die Vorrichtung zur Verringerung der Konvektion ist die exakte Lage an der berechenbaren Grenzschicht zwischen Speichergas und Testgas.

Eine zweite Möglichkeit für eine Konvektionssperre ist eine Vorrichtung zur Verringerung Konvektions- und Diffusionsströmung gemäß dem Anspruch 8, die eine Schichteinheit zum Einsetzen in eine Zugangsbohrung der Höhlung vorsieht, mit wenigstens zwei entlang einer Erstreckungsachse aufeinander folgenden Schichtlagen unterschiedlicher Porosität. Bei der Prüfung der Dichtheit (bzw. genauer: Dichtigkeit) einer mit Speichergas gefüllten Höhlung sperrt die Schichteinheit eine Speichergasschicht von einer Testgasschicht ab und ermöglicht dabei aber gleichzeitig, dass über die Schichtlagen der Schichteinheit die beiden Gasschichten miteinander (fluidtechnisch) verbunden werden, so dass Gas über die Schichtlagen hinweg durch die Schichteinheit strömen kann.

Vorzugsweise weist eine Schichtlage ein schwammartiges Material auf. Hierfür kann das Material der Schichtlage beispielsweise geschäumt sein. Hierdurch weist eine derartige Schichtlage eine vergleichsweise hohe Porosität und damit Gasdurchlässigkeit auf. In einer Ausführungsvariante ist das schwammartige Material ein Metall, vorzugsweise ein Aluminiumschaum. Alternativ ist aber auch die Herstellung aus einem keramischen Material oder aus einem Kunststoffmaterial, wie zum Beispiel PVC, möglich.

In bevorzugten Ausführungsvarianten wechseln sich entlang der Erstreckungsachse Schichtlagen eines ersten Typs und Schichtlagen eines zweiten Typs miteinander ab. Bei einem derartigen mehrschichtigen Aufbau einer Schichteinheit hat es sich als besonders vorteilhaft herausgestellt, eine Schichtlage eines ersten Typs mit einer möglichst geringen Porosität zu versehen oder nicht-porös auszugestalten, so dass diese für Gas, insbesondere für das Speicher- oder Testgas, weitestgehend undurchlässig ist, und die andere Schichtlage des zweiten Typs mit einer möglichst hohen Porosität zu versehen und beispielsweise schwammartig auszugestalten. Vorzugsweise werden mindestens zwei Schichtlagen des zweiten Typs aus einem porösen Material mit eine Porendichte von wenigstens 8 ppi ("pores per inch" = Poren je Inch), bevorzugt zwischen 10 und 30 ppi verwendet und sandwichartig zwischen zwei Endschichtlagen aus einem nicht-porösen Material angeordnet. Dabei werden die beiden Schichtlagen des zweiten Typs aus dem porösen Material durch eine Zwischenschichtlage aus einem nicht-porösen Material voneinander getrennt.

In einem solchen Ausführungsbeispiel können die einzelnen Schichtlagen des zweiten Typs aus porösem Material identisch aufgebaut sein, und beispielsweise dieselben Abmessungen und insbesondere dieselbe Dicke (als Erstreckung der jeweiligen Schichtlage entlang der Erstreckungsachse) haben. Ebenso können die Schichtlagen aus nicht-porösem Material identisch aufgebaut sein. Es sind grundsätzlich aber auch Ausführungsvarianten denkbar, bei denen die einzelnen porösen Schichtlagen unterschiedliche Porendichten haben und auch unterschiedliche Dicken. Hierdurch kann der Einfluss auf die Konvektions- und Diffusionsströmung mit einer Schichteinheit gezielter beeinflusst werden, wohingegen bei einem identischen Aufbau der einzelnen Schichtlagen zur Herstellung der Schichteinheit Gleichteile verwendet und damit Kosten reduziert werden können.

Auch kann die Schichteinheit so aufgebaut sein, dass vor dem Einsetzen in eine Zugangsbohrung die Anzahl der Schichtlagen verändert werden kann. Die Anzahl der Schichtlagen ist also hier variabel einstellbar und je nach Anwendungsfall - wenn nötig oder gewünscht - anpassbar.

Beispielsweise sind entlang der Erstreckungsachse drei bis zehn Schichtlagen (eines ersten Typs) aus einem porösen Material angeordnet, die untereinander jeweils durch eine Zwischenschichtlage (eines zweiten Typs) aus einem nicht-porösen Material räumlich voneinander getrennt sind. An einem entlang der Erstreckungsachse liegenden Ende der Schichteinheit ist hier vorzugsweise ebenfalls eine Endschichtlage aus einem nicht-porösen Material vorgesehen, die die Ober- oder Unterseite der Schichteinheit definiert.

Eine Schichtlage des ersten Typs, die nicht-porös und für Gas weitestgehend, im Idealfall vollständig undurchlässig ist, weist in einer Ausführungsvariante wenigstens eine Öffnung auf, durch die hindurch Gas strömen kann. Alternativ wäre es denkbar, anstelle einer Schichtlage aus einem Material, das für Gas undurchlässig ist, eine Schichtlage mit geringerer Porosität auf eine Schichtlage höherer Porosität folgen zu lassen oder an einer Schichtlage aus einem für Gas weitestgehend undurchlässigen Material eine gezielte Durchströmung von Gas dadurch zu ermöglichen, dass an wenigstens einer Stelle dieser Schichtlage ein poröser Bereich vorgesehen wird.

In einer besonders bevorzugten Ausführungsvariante, bei der Schichtlagen des ersten Typs aus einem nicht-porösen Material hergestellt ist, das für Gas weitestgehend undurchlässig ist, wie zum Beispiel Gummi, und je eine dieser Schichtlagen zwischen zwei Schichtlagen eines zweiten Typs mit vorgegebener Porosität angeordnet sind, ist eine Öffnung einer Schichtlage des ersten Typs zu einer Öffnung einer hierauf entlang der Erstreckungsachse folgenden zweiten Schichtlage des ersten Typs versetzt angeordnet. Derart kann Gas nicht parallel zur Erstreckungsachse durch die beiden Öffnungen strömen, da diese nicht miteinander fluchtend angeordnet sind. Vielmehr muss ein Gas zwischen den Öffnungen möglichst quer zur Erstreckungsachse durch eine poröse Schichtlage des zweiten Typs strömen, das zwischen den beiden Schichtlagen des ersten Typs angeordnet ist. Hierdurch legt ein Gas einen längeren Weg durch die Schichteinheit hindurch zurück, wodurch die Konvektions- und Diffusionsvorgänge effektiver gestört werden und etwaige Vermischungsvorgänge deutlich länger andauern. Dies erleichtert bei einer Dichtigkeitsprüfung das Bestimmen der Grenzschicht zwischen Testgas und Speichergas erheblich.

Ein Versatz zweier Öffnungen wird hierbei dadurch erreicht, dass die beiden (vorzugsweise identischen) Schichtlagen des ersten Typs bezüglich der Erstreckungssachse zueinander verdreht angeordnet sind, beispielsweise um mehr als 45°, bevorzugt um 180°. Weist jede Schichtlage des ersten Typs lediglich genau eine Öffnung mit möglichst großem radialem Abstand zu der Erstreckungsachse auf und sind die beiden Schichtlagen des ersten Typs um 180° zueinander um die Erstreckungsachse verdreht, muss ein Gas zwischen den beiden Öffnungen einen möglichst langen Strömungsweg zurücklegen. Hierbei werden die einzelnen Schichtlagen vorzugsweise durch einzelne Scheiben gebildet, die entlang der Erstreckungsachse sandwichartig hinter- bzw. übereinander angeordnet sind. In einer Ausführungsvariante weisen diese Scheiben eine kreisförmige Grundfläche auf.

Die Schichteinheit kann eine (flexible) Ummantelung aufweisen, die die Schichtlagen umgibt und dazu ausgebildet und vorgesehen ist, beim Einsetzen der Schichteinheit in eine Zugangsbohrung einer Höhlung dichtend an einer Innenwandung der Zugangsbohrung anzuliegen, so dass Gas nicht zwischen der Innenwandung und der Ummantelung an der Schichteinheit vorbei strömen kann. Eine solche Ummantelung stellt somit sicher, dass Vermischungsvorgänge zwischen einem Speichergas und einem Testgas und etwaige Gasströmungen nur über die Schichtlagen der Schichteinheit stattfinden und nicht zwischen der (Rohr-) Innenwandung und der Schichteinheit.

Eine solche Ummantelung kann beispielsweise aus einem Kunststoffmaterial, wie PVC, oder aus Gummi hergestellt sein. Mit einer solchen Ummantelung kann auch ein aufblasbarer Balg definiert sein, um die Ummantelung nach dem Einsetzen der Schichteinheit dichtend gegen die Innenwandung der Zugangsbohrung zu drücken.

Grundsätzlich ist es selbstverständlich denkbar innerhalb eines Balgs einer Konvektionssperre bzw. eine Vorrichtung zur Verringerung Konvektions- und Diffusionsströmung ebenfalls Schichtlagen unterschiedlicher Porosität vorzusehen, beispielsweise eine poröse Schichtlage, die aus einem Schwamm gebildet wird und eine Schichtlage, die aus einem Material geringerer Porosität oder einem nicht-porösem Material gebildet wird. Dementsprechend sind Merkmale einer zuvor genannten ersten Möglichkeit für eine Konvektionssperre mit den nachfolgend genannten Merkmalen einer zweiten Möglichkeit für eine Konvektionssperre ohne Weiteres kombinierbar.

Da das Profil der Zugangsbohrung bekannt ist, ist es vorteilhaft, wenn bei der Beaufschlagung mit Testgas und später bei der Entnahme des Testgases das Testgas mit vordefinierter Geschwindigkeit zugeführt wird. Dabei ist eine Steuerung der Menge der Beaufschlagung mit Testgas pro Zeiteinheit vorgesehen, die zu einer konstanten Geschwindigkeit der Wanderung der Grenzschicht zwischen Speichergas und Testgas führt. Die konstante Wanderungsgeschwindigkeit der Grenzschicht hilft, die Grenzschicht stabil zu halten, was für die korrekte Mengenbilanzierung des Testgases zwischen Beaufschlagung und Entnahme notwendig ist.

Als Testgase für die Durchführung des Verfahrens sind insbesondere Leichtgase geeignet, die durch ihre geringe Dichte dazu neigen, mit anderen Gasen Grenzschichten aufzubauen und auf der fremden Gasschicht zu schwimmen. Insbesondere eignet sich dazu Helium (He). Zur leichteren Analyse und zur Trennung von natürlich in Erdgas vorkommendem Helium eignet sich auch isotopenmarkiertes Helium. Bei der Messung von Speichergashöhlungen für Erdgas (Methan, CH4), das aufgrund des geringen Molekulargewichtes von 16 g/mol selbst eine geringe Dichte hat, ist allerdings auch Wasserstoff (H2) einsetzbar. Um die Analytik zu erleichtern, wäre auch Deuterium (D2), schwerer Wasserstoff, einsetzbar oder Tritium (T2), überschwerer Wasserstoff. Deuterium und Tritium sind in natürlichem Erdgas als Beimischung faktisch gar nicht vorhanden, so dass durch die Verwendung von diesen Gasen die Verfälschung der Massenbilanz durch natürliche Gasbeimengungen im Speichergas verringert würde. Andere Leichtgase, wie beispielsweise Boran oder Ammoniak wären durch ihre Dichte her einsetzbar, aber aufgrund der hohen chemischen Wirksamkeit sind diese Gase weniger geeignet für den Einsatz als Testgas.

Bei der Verwendung von Helium als Testgas ist es vorteilhaft, bei Durchführung des Verfahrens das Helium durch Komprimieren und Auffangen des Testgases dieses zur Aufreinigung aufzufangen.

Die Erfindung wird anhand der folgenden Figuren näher erläutert.

Es zeigen:
- Figur 1: einen Querschnitt durch eine Speicherhöhlung mit Zugangsbohrung,
- Figur 2: ein Flussdiagramm zum erfindungsgemäßen Verfahren,
- Figur 3: ein Flussdiagramm zu einer Ausgestaltung des erfindungsgemäßen Verfahrens;
- Figur 4A: eine perspektivische Ansicht einer Ausführungsvariante einer Schichteinheit einer erfindungsgemäßen Vorrichtung zur Verringerung der Konvektions- und Diffusionsströmung;
- Figur 4B: eine Seitenansicht der Schichteinheit der Figur 4A mit entfernter Ummantelung;
- Figur 4C: ausschnittsweise eine Explosionsdarstellung der Schichteinheit der Figur 4A;
- Figur 4D: eine perspektivische Ansicht der Schichteinheit der Figur 4A mit teilweise entfernter Ummantelung.

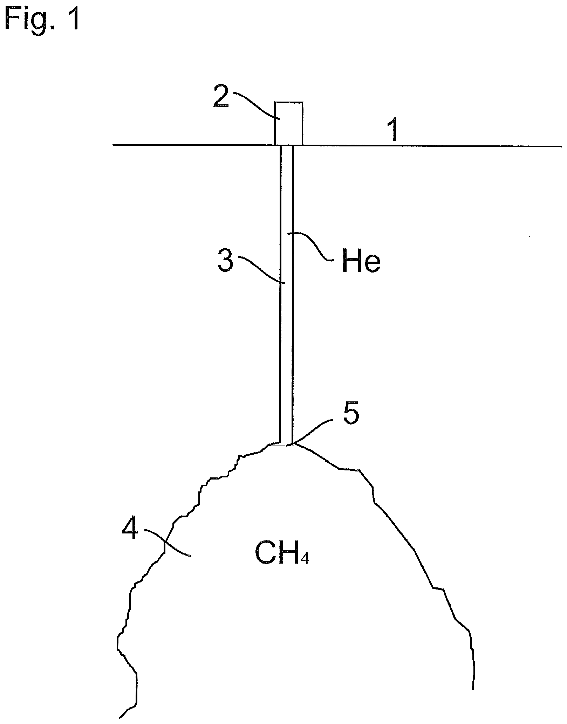

In Figur 1 ist eine Skizze eines Querschnittes durch eine Höhlung mit Zugangsbohrung dargestellt. Auf der Erdoberfläche 1 ist ein dort vorhandener Abschluss und Zugang 2 zu einer Zugangsbohrung 3 zu einer Höhlung dargestellt. Am unteren Ende der Zugangsbohrung befindet sich die Höhlung 4, die im Betrieb mit Erdgas (CH4) gefüllt ist. Zum Durchführen des Verfahrens wird beispielsweise Helium (He) in die Zugangsbohrung 3 gepresst, bis sich eine Grenzschicht 5 zwischen dem Speichergas - hier Erdgas (CH4) - und dem als Testgas eingesetzten Helium am Kopf der Höhlung ausbildet. Diese Grenzschicht wird für einen Zeitraum zwischen 10 und 100 Stunden in Ruhe gelassen und nach Ablauf dieser Zeit wird das Helium wieder aus der Zugangsbohrung 3 abgelassen. Beim Ablassen wird Temperatur, Druck, Durchfluss und Konzentration des Testgases bestimmt und daraus wird die wieder entnommene Menge an Testgas bestimmt. Durch Bilanzierung der Beaufschlagungsmenge mit Helium und der zurück gewonnene Menge Helium, das hier beispielsweise als Testgas eingesetzt wird, wird auf die Dichtheit der Zugangsbohrung geschlossen.

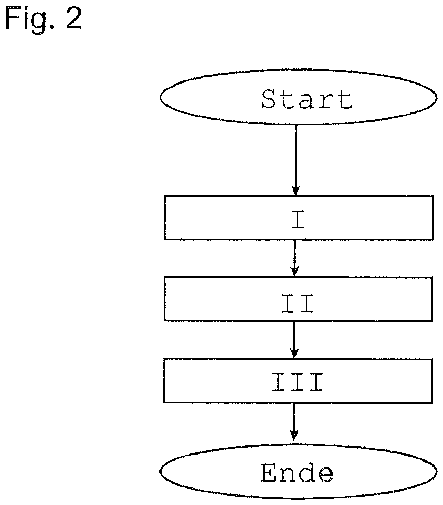

In Figur 2 ist ein Flussdiagramm des erfindungsgemäßen Verfahrens dargestellt. Beginnend beim Start wird danach in Schritt I Helium in die Zugangsbohrung 3 gepresst, wobei das Volumen der Zugangsbohrung exakt bekannt ist. Danach folgt Schritt II, in dem nach vordefinierter Zeit zwischen Schritt I und II das Testgas wieder aus der Zugangsbohrung 3 abgelassen wird. In diesem Schritt II wird während des Ablassens die Konzentration, die Temperatur, der Druck und die Durchflussmenge des abgelassenen Testgases bestimmt. Das Testgas wird solange entnommen bis ein plötzliches Abfallen der Konzentration des Testgases im entnommenen Gases festgestellt wird, das ein Zeichen für die Ankunft der Grenzschicht an der Entnahmestelle ist. Am Schluss in Schritt III wird eine Mengenbilanz aufgestellt. Wenn die wieder zurück gewonnene Menge an Testgas mit der beaufschlagten Menge Testgas übereinstimmt, dann ist die Zugangsbohrung 3 dicht.

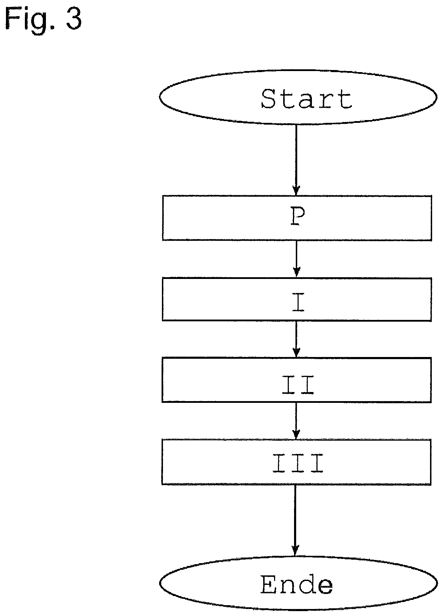

In Figur 3 ist schließlich eine Ausgestaltung des erfindungsgemäßen Verfahrens dargestellt, wobei den Schritten gemäß Figur 2 ein Vorbereitungsschritt P vorangestellt ist. Hier wird mit Hilfe einer Setzvorrichtung eine Vorrichtung zur Verringerung der Konvektions- und Diffusionsströmung zwischen Speichergas und Testgas an die Stelle eingesetzt, an der die Grenzschicht zwischen Testgas und Speichergas während der Ruhephase vorhanden ist.

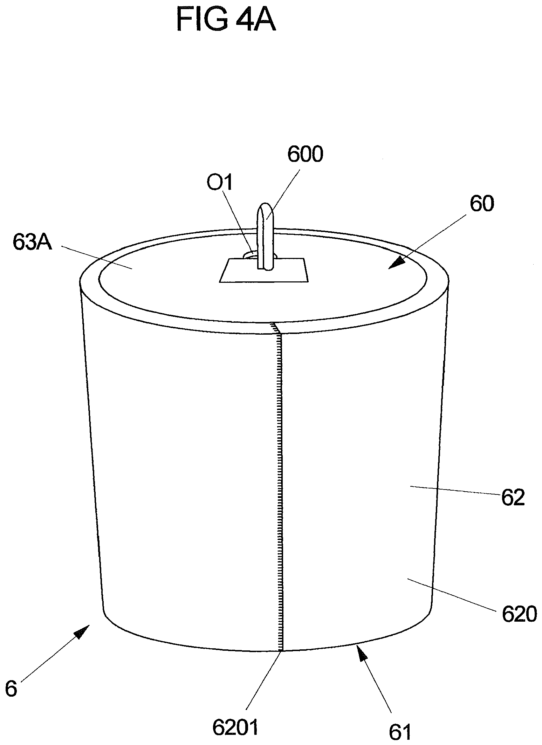

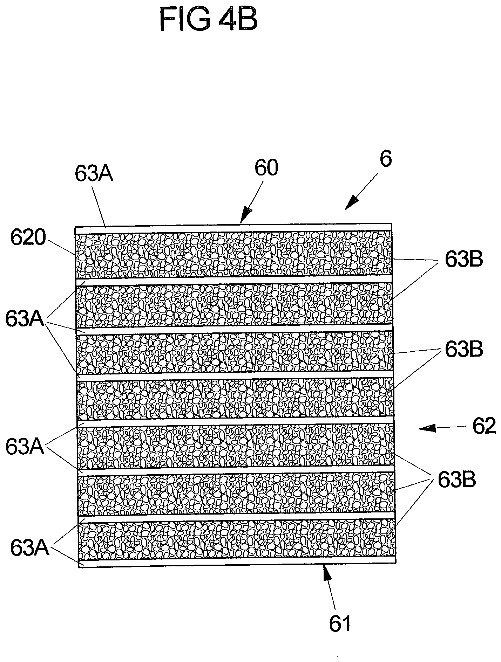

Mit den Figuren 4A bis 4D wird eine Ausführungsvariante einer Schichteinheit 6 einer erfindungsgemäßen Vorrichtung zur Verringerung der Konvektions- und Diffusionsströmung (Konvektionssperre) in unterschiedlichen Ansichten veranschaulicht.

Die Schichteinheit 6 ist hierbei im Wesentlichen kreiszylindrisch, um in eine Zugangsbohrung 3 einer Höhlung 4 eingesetzt werden zu können, deren Dichtheit bzw. genauer deren Dichtigkeit überprüft werden soll, obwohl die Höhlung 4 bereits mit einem Speichergas gefüllt ist. Über die Schichteinheit 6 wird hierbei eine Dämmung der aufgrund Konvektion und Diffusion verursachten Vermischung von Speichergas und Testgas erreicht. Dabei wird mittels der Schichteinheit 6 die vorhandene Geometrie der Zugangsbohrung 3 in der Vermischungszone gestört. Die Schichteinheit 6 übt gleichzeitig aber keinen Einfluss auf die strömungstechnischen Eigenschaften der Zugangsbohrung 3 aus.

Die kreiszylindrische Schichteinheit 6 erstreckt sich längs einer Zylinderachse und weist in ihrem Inneren ein Schichtenpaket aus mehreren Schichtlagen 63A, 63B unterschiedlicher Porosität auf. So sind zwischen einer Oberseite 60 und einer Unterseite 61 in einem Mittelteil 62 der Schichteinheit 6 sandwichartig mehrere kreisscheibenförmige Schichtlagen 63A aus einem für das Speichergas und für das Testgas undurchlässigen Material, beispielsweise Gummi, und Schichtlagen 63B aus einem porösen, schwammartigen Material, beispielsweise einem Aluminiumschaum, angeordnet. Dabei wechseln sich kreisscheibenförmige Schichtlagen 63A aus nicht-porösem Material mit kreisscheibenförmigen Schichtlagen 63B aus porösem Material entlang der Zylinderachse ab, so dass je zwei Schichtlagen 63B aus porösem Material durch eine als Zwischenschichtlage fungierende Schichtlage 63A aus nicht-porösem Material räumlich voneinander getrennt werden. Beispielhaft sind vorliegend sieben Schichtlagen 63B aus einem porösen, schwammartigen Material vorgesehen, die paarweise von sechs Schichtlagen 63A aus nicht porösem Material voneinander getrennt sind. Zwei weitere Schichtlagen 63A aus dem nicht-porösen Material sind zudem an der Oberseite 60 und der Unterseite 61 vorgesehen, so dass diese als Endschichtlagen fungieren und zwischen ihnen die sieben porösen Schichtlagen 63B und die sechs nicht-porösen Schichtlagen 63A angeordnet sind.

Vorliegend weisen die porösen Schichtlagen 63B eine Dicke auf, die um ein Vielfaches größer ist als die Dicke der relativ flachen nicht-porösen Schichtlagen 63A. Zudem sind die porösen Schichtlagen 63B zueinander identisch ausgebildet, ebenso wie die nicht-porösen Schichtlagen 63A zueinander identisch ausgebildet sind. Grundsätzlich wäre es aber auch denkbar, beispielsweise die Dicke der schwammartigen, porösen Schichtlagen 63B zueinander unterschiedliche zu wählen.

Vorliegend weisen die porösen Schichtlagen 63B durchgängig eine Porendichte von 10 bis 30 ppi auf. Die Schichteinheit 6 weist ferner einen Mindestdurchmesser von ca. 60 mm und eine Mindestlänge von ca. 1000 mm auf.

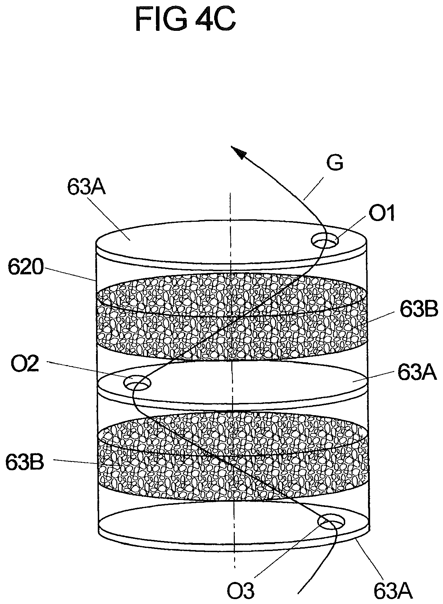

Wie anhand der Explosionsdarstellung der Figur 4C ersichtlich ist, in der der Einfachheit halber lediglich fünf Schichtlagen 63A, 63B dargestellt sind, weist jede der nicht-porösen Schichtlagen 63A eine Öffnung O1, O2 oder O3 auf. Eine solche Öffnung O1, O2, O3 ist beabstandet zu der zentral verlaufenden Zylinderachse vorgesehen und liegt hier im Bereich eines radialen Randes der jeweiligen Schichtlage 63A. Die einzelnen Schichtlagen 63A sind jeweils zu der entlang der Zylinderachse nachfolgenden nicht-porösen Schichtlage 63A um 180° verdreht angeordnet. Eine beispielhaft in der Figur 4C angedeutete Gasströmung G muss somit auf einem Weg durch die Schichteinheit 6 einen möglichst langen Weg durch eine zwischen zwei nicht-poröse Schichtlagen 63A vorgesehene poröse Schichtlage 63B zurücklegen. Das Gas kann somit nicht parallel zur Zylinderachse durch zwei aufeinanderfolgende Öffnungen O1, O2 oder O2, O3 strömen, sondern strömt zwischen diesen Öffnungen O1, O2 oder O2, O3 auch quer zur Zylinderachse durch eine poröse Schichtlage 63B. Hierdurch muss das Gas einen längeren Weg zurücklegen als bei einer offenen Zugangsbohrung 3, so dass die Konvektions- und Diffusionsvorgänge zeitlich langsamer ablaufen, wenn die Konvektionssperre mit der Schichteinheit 6 eingesetzt wird.

Bei der Schichteinheit 6 ist das Schichtenpaket aus den Schichtlagen 63A und 63B radial von einer flexiblen Ummantelung 620 schützend umgeben. Diese Ummantelung 620 wird beispielsweise aus einem flexiblen Kunststoffmaterial hergestellt und schützt einerseits die Schichtlagen 63A, 63B vor Beschädigung und Verschmutzung beim Einsetzen der Schichteinheit 6 in die Zugangsbohrung 3. Andererseits wird über die Flexibilität der Ummantelung 620 erreicht, dass die Schichteinheit 6 dichtend an einer (Rohr-) Innenwandung der Zugangsbohrung 3 anliegt, so dass Gas nicht zwischen der Innenwandung und der Ummantelung 620 an der Schichteinheit vorbei strömen kann, sondern das Gas stets über die Schichtlagen 63A und 63B strömen muss.

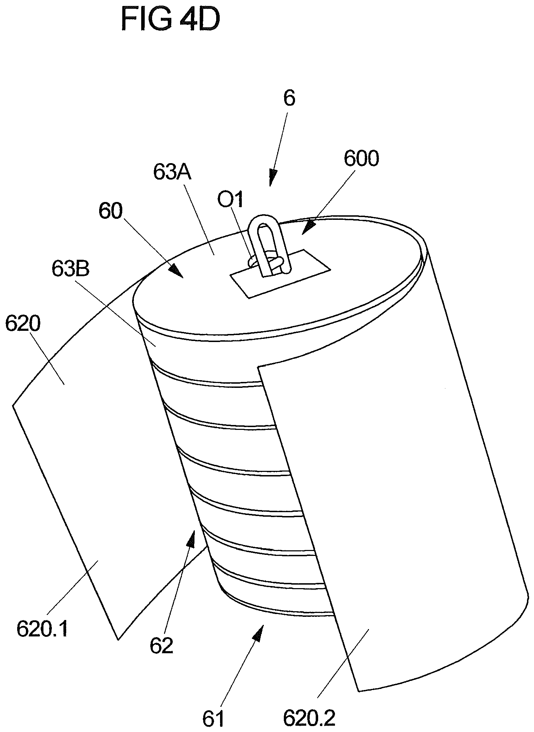

Wie insbesondere in der Figur 4D veranschaulicht ist, kann die Ummantelung 620 beispielsweise durch eine flexible Kunststoffbahn gebildet sein, die um das Schichtenpaket aus den Schichtlagen 63A und 63B einmal umlaufend gewickelt wird. Freie Längsenden 620.1 und 620.2 der Ummantelung 620 werden dann aneinander fixiert, so dass die Ummantelung 620 die Schichtlagen 63A und 63B schützend umgibt. Eine Verbindung der beiden Enden 620.1 und 620.2 der Ummantelung 620 ist in der Figur 4A durch eine linienförmig und parallel zu der Zylinderachse laufende Verbindungsstelle veranschaulicht. Zur Fixierung der Ummantelung 620 an dem Schichtenpaket ist die Ummantelung 620 zusätzlich noch an der Oberseite 60 und der Unterseite 61 mit der jeweiligen Endschichtlage 63A verbunden.

Um die Ummantelung 620 leicht an dem aus den Schichtlagen 63A und 63B gebildeten Schichtenpaket anbringen zu können, sind die einzelnen Schichtlagen 63A und 63B zwischen der Oberseite 60 und der Unterseite 61 eingespannt, beispielsweise über eine zentral entlang der Zylinderachse verlaufende und durch alle Schichtlagen 63A und 63B hindurch geführte Verbindungsstange und an deren Enden an der Unterseite 61 und der Oberseite 60 vorgesehene Halteplatten.

An einem an der Oberseite 60 vorstehenden Ende dieser Verbindungsstange ist in dem Ausführungsbeispiel der Figuren 4A bis 4D ein Befestigungsmittel 600, hier in Form eines Metallrings vorgesehen. Über dieses Befestigungsmittel 600 ist eine Verbindung zu einer Setzvorrichtung (nicht dargestellt) möglich, mittels der die Schichteinheit 6 unmittelbar unterhalb des Bohrfußes (Rohrschuh) der Zugangsbohrung 3 eingebracht werden kann.

### BEZUGSZEICHENLISTE

- 1: Erdoberfläche
- 2: Zugang / Entnahmestelle
- 3: Zugangsbohrung
- 4: Höhlung
- 5: Grenzschicht
- 6: Schichteinheit
- 60: Oberseite
- 600: Befestigungsmittel
- 61: Unterseite
- 62: Mittelteil
- 620: Ummantelung
- 620.1: Erstes Ende
- 620.2: Zweites Ende
- 6201: Verbindungsstelle
- 63A: Erste Schichtlage (Gummischicht)
- 63B: Zweite Schichtlage (Metallschicht)
- G: Gasstrom
- O1, O2, O3: Öffnung

## Patentansprüche

1. Verfahren zur Prüfung der Dichtheit einer Zugangsbohrung (3) einer Höhlung (4), die bereits mit einem Speichergas gefüllt ist, durch Beaufschlagen der Höhlung (4) mit einem Testgas,
**gekennzeichnet durch**
- Überschichten des in der Höhlung (4) befindlichen Speichergases mit einem Testgas mit vordefinierter Menge, so dass sich eine Grenzschicht zwischen dem Speichergas und dem Testgas bildet, wobei das Testgas eine geringere Dichte aufweist als das Speichergas,
- Ablassen des Testgases nach vordefinierter Zeit,
- Bilanzieren der Menge des Testgases.

2. Verfahren nach Anspruch 1,
**gekennzeichnet durch**
das Bestimmen der Ankunft der beim Ablassen des Testgases wandernden Grenzschicht an einer Entnahmestelle und/oder den Einsatz einer Vorrichtung zur Verringerung der Konvektions- und Diffusionsströmung zwischen Speichergas und Testgas.

3. Verfahren nach Anspruch 2,
**dadurch gekennzeichnet, dass**
die Vorrichtung zur Verringerung der Konvektions- und Diffusionsströmung an die Stelle unterhalb eines Rohrschuhs eingesetzt wird, an der die Grenzschicht zwischen Testgas und Speichergas während einer Ruhephase vor dem Ablassen des Testgases vorhanden ist.

4. Verfahren nach Anspruch 2 oder 3,
**dadurch gekennzeichnet, dass**
die Vorrichtung zur Verringerung der Konvektions- und Diffusionsströmung
- einen metallischen Schwamm aufweist, der vor dem Überschichten des Speichergases in den Fuß einer Zugangsbohrung der Höhlung eingesetzt wird, und/oder
- einen aufblasbaren Balg mit einem Schwamm zur Vermeidung eines Druckabfalls zwischen Speichergas und Testgas über den Balg aufweist, der vor dem Überschichten des Speichergases in den Fuß einer Zugangsbohrung der Höhlung eingesetzt wird.

5. Verfahren nach einem der Ansprüche 2 bis 4,
**dadurch gekennzeichnet, dass**
- die Vorrichtung eine Schichteinheit (6) zum Einsetzen in eine Zugangsbohrung der Höhlung (4) umfasst und die Schichteinheit (6) wenigstens zwei entlang einer Erstreckungsachse aufeinanderfolgende Schichtlagen (63A, 63B) unterschiedlicher Porosität aufweist und/oder
- eine Setzvorrichtung verwendet wird, um die Vorrichtung zur Verringerung der Konvektions- und Diffusionsströmung unterhalb des Fuß der Zugangsbohrung (3) der Höhlung (4) einzubringen.

6. Verfahren nach einem der Ansprüche 1 bis 5,
**gekennzeichnet durch**
die Steuerung der Aufgabe- und/oder Ablassmenge des Testgases pro Zeiteinheit in Abhängigkeit des bekannten Volumenprofils der Höhlung im Bereich einer Zugangsbohrung der Höhlung.

7. Vorrichtung zur Verringerung der Konvektions- und Diffusionsströmung zwischen einem in einer Höhlung befindlichen Speichergas und einem Testgas, das zur Prüfung der Dichtheit einer Zugangsbohrung (3) der Höhlung (4) in vordefinierter Menge in die Höhlung (4) eingebracht wird und mit dem das in der Höhlung (4) befindliche Speichergas überschichtet wird, wobei
- die Vorrichtung einen aufblasbaren Balg zum Einsetzen in eine Zugangsbohrung der Höhlung (4) aufweist und in dem Balg eine Membran oder ein Schwamm vorgesehen ist,
- der Balg bei der Prüfung der Dichtheit der mit Speichergas gefüllten Höhlung (4) eine Speichergasschicht von einer Testgasschicht absperren kann und
- die Membran oder der Schwamm die beiden Gasschichten miteinander verbindet.

8. Vorrichtung zur Verringerung der Konvektions- und Diffusionsströmung zwischen einem in einer Höhlung befindlichen Speichergas und einem Testgas, das zur Prüfung der Dichtheit einer Zugangsbohrung (3) der Höhlung (4) in vordefinierter Menge in die Höhlung (4) eingebracht wird und mit dem das in der Höhlung (4) befindliche Speichergas überschichtet wird, wobei
- die Vorrichtung eine Schichteinheit (6) zum Einsetzen in eine Zugangsbohrung der Höhlung (4) umfasst und die Schichteinheit (6) wenigstens zwei entlang einer Erstreckungsachse aufeinanderfolgende Schichtlagen (63A, 63B) unterschiedlicher Porosität aufweist,
- die Schichteinheit (6) bei der Prüfung der Dichtheit der mit Speichergas gefüllten Höhlung (4) eine Speichergasschicht von einer Testgasschicht absperren kann und
- über die Schichtlagen (63A, 63B) die beiden Gasschichten miteinander verbunden werden können.

9. Vorrichtung nach Anspruch 8, **dadurch gekennzeichnet, dass**
- eine Schichtlage (63B) ein schwammartiges Material aufweist, und/oder
- sich eine Schichtlage (63A) eines ersten Typs und eine Schichtlage (63B) eines zweiten Typs entlang der Erstreckungsachse abwechseln und/oder
- Schichtlagen (63A) des ersten Typs aus einem Kunststoffmaterial und Schichtlagen (63B) des zweiten Typs aus einem Metall hergestellt sind.

10. Vorrichtung nach Anspruch 9, **dadurch gekennzeichnet, dass** die Schichtlage (63A) des ersten Typs aus einem Material hergestellt ist, das für Gas weitestgehend undurchlässig ist, und die Schichtlage (63A) des ersten Typs mindestens eine Öffnung (O1, O2, O3) aufweist, durch die hindurch Gas strömen kann.

11. Vorrichtung nach Anspruch 10, **dadurch gekennzeichnet, dass** eine Öffnung (O1, O2, O3) einer ersten Schichtlage (63A) des ersten Typs zu einer Öffnung (O3, O1, O2) einer zweiten Schichtlage (63A) des ersten Typs versetzt angeordnet ist.

12. Vorrichtung nach Anspruch 11, **dadurch gekennzeichnet, dass** die beiden Schichtlagen (63A) des ersten Typs bezüglich der Erstreckungsachse um mehr als 45°, insbesondere um 180° zueinander verdreht angeordnet sind.

13. Vorrichtung nach einem der Ansprüche 8 bis 12, **dadurch gekennzeichnet, dass** die Schichteinheit (6) eine Ummantelung (620) aufweist, die die Schichtlagen (63A, 63B) umgibt und dazu ausgebildet und vorgesehen ist, beim Einsetzen der Schichteinheit (6) in die Zugangsbohrung dichtend an einer Innenwandung der Zugangsbohrung anzuliegen.

14. Verwendung eines aufblasbaren Balgs mit einer darin vorgesehenen Membran oder einem darin vorgesehenen Schwamm zur Verringerung der Konvektions- und Diffusionsströmung zwischen einem in einer unterirdischen Höhlung befindlichen Speichergas und einem Testgas bei der Prüfung der Dichtheit der mit Speichergas gefüllten Höhlung mithilfe des Testgases.

15. Verwendung einer Schichteinheit (6) mit wenigstens zwei Schichtlagen (63A, 63B) unterschiedlicher Porosität zur Verringerung der Konvektions- und Diffusionsströmung zwischen einem in einer unterirdischen Höhlung befindlichen Speichergas und einem Testgas bei der Prüfung der Dichtheit der mit Speichergas gefüllten Höhlung mithilfe des Testgases.

## Claims

1. Method for testing the tightness of an access hole (3) of a cavity (4), which is already filled with a stored gas, by charging the cavity (4) with a test gas,
**characterized by**
- overlayering the stored gas situated in the cavity (4) with a test gas of a predefined amount such that a barrier layer forms between the stored gas and the test gas, wherein the test gas has a lower density than the stored gas,
- releasing the test gas after a predefined time,
- balancing the amount of test gas.

2. Method according to claim 1, **characterized by** determining the arrival of the barrier layer, which is moving when draining the test gas, at a removal point and/or using a device for reducing the convection and diffusion flow between stored gas and test gas.

3. Method according to claim 2, **characterized in that** the device for reducing the convection and diffusion flow is inserted at the point below a pipe shoe where the barrier layer between test gas and stored gas is present during a resting phase before draining the test gas.

4. Method according to claim 2 or 3, **characterized in that** the device for reducing the convection and diffusion flow comprises.
- a metallic sponge, which is inserted into the base of an access hole of the cavity before overlayering the stored gas, and/or
- an inflatable bellows with a sponge for avoiding a pressure drop between stored gas and test gas above the bellows, which is inserted into the base of an access hole of the cavity before overlaying the stored gas.

5. Method according to one of the claims 2 to 4, **characterized in that**
- the device comprises a layer unit (6) for insertion into an access hole of the cavity (4) and the layer unit (6) comprises at least two layers (63A, 63B) of different porosity, which are successive along an extension axis, and/or
- a setting device is used for introducing the device for reducing the convection and diffusion flow below the base of the access hole (3) of the cavity (4).

6. Method according to one of the claims 1 to 5, **characterized by** controlling the placed amount and/or the drained amount of the test gas per time unit depending on the known volume profile of the cavity in the area of an access hole of the cavity.

7. Device for reducing the convection and diffusion flow between a stored gas situated in a cavity and the test gas, which is introduced in a predefined amount into the cavity (4) for testing the tightness of an access hole (3) of the cavity (4) and with which the stored gas situated in the cavity (4) is overlaid, wherein
- the device comprises an inflatable bellows for insertion into an access hole of the cavity (4) and a membrane or sponge is provided in the bellows,
- the bellows can block a stored gas layer from a test gas layer when testing the tightness of the cavity (4) filled with the stored gas and
- the membrane or the sponge connects the two gas layers together.

8. Device for reducing the convection and diffusion flow between a stored gas situated in a cavity and a test gas, which is introduced in a predefined amount into the cavity (4) for testing the tightness of an access hole (3) of the cavity (4) and with which the stored gas situated in the cavity (4) is overlaid, wherein
- the device comprises a layer unit (6) for insertion into a access hole of the cavity (4) and the layer unit (6) comprises at least two layers (63A, 63B) of different porosity, which are successive along an extension axis,
- the layer unit (6) can block a stored gas layer from a test gas layer when testing the tightness of the cavity (4) filled with the stored gas and
- the two gas layers can be connected together via the layers (63A, 63B).

9. Device according to claim 8, **characterized in that**
- a layer (63B) comprises a sponge-like material, and/or
- a layer (63A) of a first type and a layer (63B) of a second type alternate along the extension axis, and/or
- layers (63A) of the first type are made of a plastic material and layers (63B) of the second type are made of a metal.

10. Device according to claim 9, **characterized in that** the layer (63A) of the first type is made of a material which is impermeable for gas as far as possible, and the layer (63A) of a first type comprises at least one opening (O1, O2, O3) through which the gas can flow.

11. Device according to claim 10, **characterized in that** an opening (O1, O2, O3) of a first layer (63A) of the first type is offset to an opening (O3, O1, O2) of a second layer (63A) of a first type.

12. Device according to claim 11, **characterized in that** the two layers (63A) are arranged towards each other in a distorted manner in respect to the extension axis by about more than 45°, in particular about 180°.

13. Device according to one of the claims 8 to 12, **characterized in that** the layer unit (6) comprises a jacket (620), which surrounds the layers (63A, 63B) and is designed and provided to fit tightly at an inner wall of the access hole when inserting the layer unit (6) into the access hole.

14. Use of an inflatable bellows with a membrane provided therein or a sponge provided therein for reducing the convection and diffusion flow between a stored gas situated in an underground cavity and a test gas when testing the tightness of the cavity filled with the stored gas by means of the test gas.

15. Use of a layer unit (6) with at least two layers (63A, 63B) of different porosity for reducing the convection and diffusion flow between a stored gas situated in an underground cavity and a test gas when testing the tightness of the cavity filled with the stored gas by means of the test gas.

## Revendications

1. Procédé servant à vérifier l'étanchéité d'un trou d'accès (3) d'une cavité (4), qui est déjà remplie d'un gaz de stockage, en soumettant la cavité (4) à l'action d'un gaz de test,
**caractérisé par**
- la superposition du gaz de stockage se trouvant dans la cavité (4) et d'un gaz de test en une quantité prédéfinie si bien qu'une couche limite se forme entre le gaz de stockage et le gaz de test, dans lequel le gaz de test présente une densité inférieure à celle du gaz de stockage,
- l'évacuation du gaz de test après une durée prédéfinie ;
- l'établissement du bilan de la quantité du gaz de test.

2. Procédé selon la revendication 1,
**caractérisé par**
la détermination de l'arrivée de la couche limite se déplaçant lors de l'évacuation du gaz de test au niveau d'un emplacement de prélèvement et/ou lors de l'utilisation d'un dispositif servant à réduire l'écoulement par convection et par diffusion entre le gaz de stockage et le gaz de test.

3. Procédé selon la revendication 2,
**caractérisé en ce que**
le dispositif servant à réduire l'écoulement par convection et par diffusion est utilisé au niveau de l'emplacement sous un sabot de tubage, au niveau duquel la couche limite entre le gaz de test et le gaz de stockage est présente pendant une phase de repos avant l'évacuation du gaz de test.

4. Procédé selon la revendication 2 ou 3,
**caractérisé en ce que**
le dispositif servant à réduire l'écoulement par convection et par diffusion
- présente une éponge métallique, qui est utilisée avant la superposition du gaz de stockage dans l'embase d'un trou d'accès de la cavité, et/ou
- présente un soufflet pouvant être gonflé avec une éponge servant à éviter une chute de pression entre le gaz de stockage et le gaz de test par l'intermédiaire du soufflet, qui est utilisé avant la superposition du gaz de stockage dans l'embase d'un trou d'accès de la cavité.

5. Procédé selon l'une quelconque des revendications 2 à 4,
**caractérisé en ce que**
- le dispositif comprend une unité de couche (6) destinée à être insérée dans un trou d'accès de la cavité (4), et l'unité de couche (6) présente au moins deux strates de couche (63A, 63B) à porosité différente se suivant les unes les autres le long d'un axe d'extension, et/ou
- un dispositif de pose est employé pour introduire le dispositif servant à réduire l'écoulement par convection et par diffusion sous l'embase du trou d'accès (3) de la cavité (4).

6. Procédé selon l'une quelconque des revendications 1 à 5,
**caractérisé par**
la commande de la quantité de distribution et/ou d'évacuation du gaz de test par unité de temps en fonction du profil de volume connu de la cavité dans la zone d'un trou d'accès de la cavité.

7. Dispositif servant à réduire l'écoulement par convection et diffusion entre un gaz de stockage se trouvant dans une cavité et un gaz de test, qui est introduit en une quantité prédéfinie dans la cavité (4) aux fins de la vérification de l'étanchéité d'un trou d'accès (3) de la cavité (4) et auquel le gaz de stockage se trouvant dans la cavité (4) est superposé, dans lequel
- le dispositif présente un soufflet pouvant être gonflé destiné à être inséré dans un trou d'accès de la cavité (4) et une membrane ou une éponge est prévue dans le soufflet,
- le soufflet peut isoler une couche de gaz de stockage d'une couche de gaz de test lors de la vérification de l'étanchéité de la cavité (4) remplie du gaz de stockage et
- la membrane ou l'éponge relie les deux couches de gaz entre elles.

8. Dispositif servant à réduire l'écoulement par convection et diffusion entre un gaz de stockage se trouvant dans une cavité et un gaz de test, qui est introduit dans la cavité (4) en une quantité prédéfinie aux fins de la vérification de l'étanchéité d'un trou d'accès (3) de la cavité (4) et auquel le gaz de stockage se trouvant dans la cavité (4) est superposé, dans lequel
- le dispositif comprend une unité de couche (6) destinée à être insérée dans un trou d'accès de la cavité (4) et l'unité de couche (6) présente au moins deux strates de couche (63A, 63B) à porosité différente se suivant les unes les autres le long de l'axe d'extension,
- l'unité de couche (6) peut isoler lors de la vérification de l'étanchéité de la cavité (4) remplie du gaz de stockage une couche de gaz de stockage d'une couche de gaz de test, et
- les deux couches de gaz peuvent être reliées l'une à l'autre par l'intermédiaire des strates de couche (63A, 6B).

9. Dispositif selon la revendication 8, **caractérisé en ce que**
- une strate de couche (63B) présente un matériau spongieux, et/ou
- une strate de couche (63A) d'un premier type et une strate de couche (63B) d'un deuxième type alternent le long de l'axe d'extension, et/ou
- des strates de couche (63A) du premier type composées d'un matériau en plastique et des strates de couche (63B) du deuxième type sont fabriquées à partir d'un métal.

10. Dispositif selon la revendication 9, **caractérisé en ce que** la strate de couche (63A) du premier type est fabriquée à partir d'un matériau, qui de loin ne laisse pas passer le gaz, et la strate de couche (63A) du premier type présente au moins une ouverture (O1, O2, O3), à travers laquelle du gaz peut s'écouler.

11. Dispositif selon la revendication 10, **caractérisé en ce qu'**une ouverture (O1, O2, O3) d'une première strate de couche (63A) du premier type est disposée de manière décalée par rapport à une ouverture (O3, O1, O2) d'une deuxième strate de couche (63A) du premier type.

12. Dispositif selon la revendication 11, **caractérisé en ce que** les deux strates de couche (63A) du premier type par rapport à l'axe d'extension sont disposées en étant tournées l'une par rapport à l'autre d'un angle supérieur à 45°, en particulier d'un angle de 180°.

13. Dispositif selon l'une quelconque des revendications 8 à 12, **caractérisé en ce que** l'unité de couche (6) présente une gaine (620) qui entoure les strates de couche (63A, 63B) et est réalisée et prévue pour reposer de manière étanche contre une paroi intérieure de trou d'accès lors de l'insertion de l'unité de couche (6) dans le trou d'alésage.

14. Utilisation d'un soufflet pouvant être gonflé avec une membrane prévue à l'intérieur ou une éponge prévue à l'intérieur pour réduire l'écoulement par convection et diffusion entre un gaz de stockage se trouvant dans une cavité souterraine et un gaz de test lors de la vérification de l'étanchéité de la cavité remplie du gaz de stockage à l'aide du gaz de test.

15. Utilisation d'une unité de couche (6) avec au moins deux strates de couche (63A, 63B) à porosité différente pour réduire l'écoulement par convection et diffusion entre un gaz de stockage se trouvant dans une cavité souterraine et un gaz de test lors de la vérification de l'étanchéité de la cavité remplie de gaz de stockage à l'aide du gaz de test.
